# EUROPEAN PATENT SPECIFICATION

(11) **EP 3 838 514 B1**
(45) Date of publication and mention of the grant of the patent: **02.04.2025**
(21) Application number: 20214875.5
(22) Date of filing: 17.12.2020
(51) Int. Cl.: B25J 15/06

(54) **A GRIPPER UNIT**
GREIFEREINHEIT
UNITÉ DE PRÉHENSION

(30) Priority: 19.12.2019 EP 19217884
(43) Date of publication of application: 23.06.2021
(73) Proprietor: Tetra Laval Holdings & Finance S.A., 1009 Pully (CH)
(72) Inventor: BAKER, Nick, 27194 YSTAD (SE); Nordin, Joel, 246 55 Löddeköpinge (SE)
(74) Representative: Tetra Pak - Patent Attorneys SE

(56) References cited:
- EP-B1- 2 414 138
- DE-A1- 102006 022 278
- JP-A- 2017 075 029
- US-A1- 2006 242 785

## Description

### Technical Field

The invention relates to a gripper unit, and in particular to a gripper unit being configured to attain, maintain, and terminate an interface between machinery and a packaging container.

### Background Art

Individual packaging containers, such as liquid food packaging containers, are typically produced from a carton-based material and filled using a high-speed filling machine. When the filled, formed, and sealed packaging containers are unloaded from the filling machine they are typically transferred to a cardboard packer in which a predetermined number of packaging containers are stacked in a packing pattern and placed in a case made from a cardboard blank, or to a film machine or similar equipment that encloses groups of packaging containers.

During such manufacturing, there is a need to move the packaging containers from one location to another. For example, packaging containers need to be moved from the filling machine (or any conveyor associated thereto) to the cardboard packer (or any conveyor associated thereto).

In order to move packages from one area to another within industrial machine equipment, a robot arm can be used. The robot arm may be programmed to move in three dimensions with various degrees of freedom. At the distal end of the robot arm, a gripper is arranged providing an interface between the machine and the packaging container.

Such packaging container interfaces are traditionally mechanical grippers, or vacuum cup grippers that operate on the upper plane of the packaging container. However, prior art grippers do not provide the speed nor stability required for the cycle time that is typically needed, i.e. the time needed to perform one complete operation. In modern manufacturing, grippers must be able to perform a complete handling sequence in 1 second or less.

Further prior art is described in patent documents US2006/242785A1, DE102006022278A1, EP2414138B1, JP2017075029A.

Most constrains of prior art grippers bore down to the cycle time required. Problems stem from excessive robot movement being needed to accommodate the physical size and geometric requirements of a gripper. This includes positioning, activation, placing, release and careful withdrawal of the gripper in relation to the packaging container. Also, problems are related to excessive time required to evacuate the vacuum cups used to grip the packaging containers, as well as to excessive time needed to ensure that the vacuum has been completely broken so as not to disturb the packaging containers as the gripper retreats.

There is thus a need for an improved gripper unit, providing more robust, more accurate, and faster positioning of packaging containers.

### Summary

It is an object of the invention to at least partly overcome one or more of the above-identified limitations of the prior art. In particular, it is an object to provide a gripper unit which reduces any "pushing action" on the packaging container once the vacuum is removed for releasing the packaging container from the gripper unit.

According to a first aspect, gripper unit is provided. The gripper unit comprises a vacuum distribution unit connected to a housing such that linear motion of the vacuum distribution unit is allowed in a first direction towards and away from the housing. This improves accuracy of the gripper unit. The gripper unit comprises at least a first leaf spring connecting the vacuum distribution unit to the housing.

The gripper unit further comprises at least one additional leaf spring connecting the vacuum distribution unit to the housing.

The at least one additional leaf spring has substantially the same length as the first leaf spring.

The at least one additional leaf spring is arranged in parallel with the first leaf spring, but spaced apart in the first direction. Hence, rotation of the vacuum distribution unit is prevented in a plane defined by a central axis of the first leaf spring and a central axis of the additional leaf spring.

The gripper unit comprises two additional leaf springs arranged on opposite sides of the first leaf spring. Symmetry is thereby achieved.

The gripper unit may comprise a plurality of gripper units according to the first aspect. In such embodiment it is possible to move a plurality of packaging containers using a single robotic arm.

The gripper unit comprises at least one vacuum suction cup. The at least one suction cup is moveable between an idle position in which the at least one suction cup is arranged completely within a housing of the gripper unit, and an active position in which the at least one suction cup is extending out from said housing.

The gripper unit comprises at least two suction cups operating in the same plane and being jointly movable between the idle position and the active position. Improved gripping of the packaging container is thereby achieved.

The position of the at least one suction cup may be controlled using vacuum, which allows for the use of readily available and high quality vacuum generators.

The gripper unit further comprises a control suction cup. Activation of the control suction cup may urge the at least one suction cup to move from the idle position to the active position, which is advantageous in that a common air supply can be utilized for the attaching suction cups and for the control suction cup.

The control suction cup may be arranged inside a cavity of the housing, wherein said cavity is closed by a lid against which the control suction cup will apply a vacuum.

According to a second aspect, a robotic arm assembly is provided. The robotic arm assembly comprises a robot arm, such as an articulated robot arm or a delta robot, and at least one gripper unit according to the first aspect being provided on the robot arm.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a schematic view of a gripper unit forming part of a robot arm assembly;
Figs. 2a-c are side views of a gripper unit according to an embodiment, in different operation modes;
Fig. 3 is an isometric view of a gripper unit according to an embodiment;
Fig. 4 is a cross-sectional view of a gripper unit according to an embodiment;
Fig. 5 is an isometric view of a gripper unit according to an embodiment;
Fig. 6 is an isometric view of a gripper unit assembly according to an embodiment;
Fig. 7 is a yet further cross-sectional view of a gripper unit according to an embodiment; and
Fig. 8 is a schematic view of a method according to an embodiment.

### Detailed description

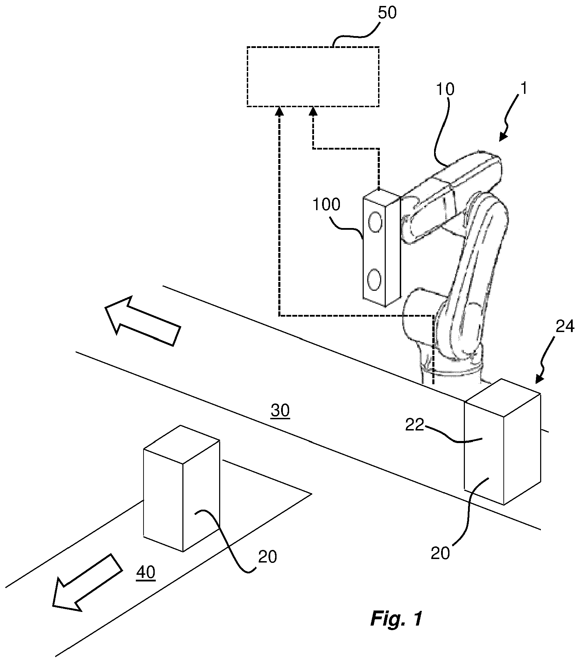

Starting in Fig. 1, a robotic arm assembly 1 according to an embodiment is schematically shown. The robotic arm assembly 1 comprises a robotic arm 10 and a gripper unit 100, whereby the gripper unit 100 is provided on the distal end of the robotic arm 10. Preferably, the robotic arm 10 is an articulated delta robot, or an articulated robot having at least three rotary joints. Articulated robots, as well as delta robots, are well known in the art and will not be described further herein.

The robotic arm assembly 1 is arranged in a machine environment, such as between a filling machine and a cardboard packer (not shown) or other type of equipment. In such example, the robotic arm assembly 1 is provided in order to move individual packaging containers 20, being produced by the filling machine and discharged therefrom by means of a conveyor 30. The packaging containers 20, which typically have a main body 22 including at least one planar panel 24, are gripped by the robotic arm assembly 1 as they are transported on the conveyor 30, and moved to a feeding conveyor 40 of the cardboard packer to be transported to further equipment downstream the conveyor 40. It should be noted that the planar panel 24 of the main body 22 must not necessarily form an entire side of the packaging container 20, but should preferably be a planar surface big enough to be gripped by the gripper unit 100.

The robotic arm assembly 1 is configured to operate at very high speed; from an idle position, it must be capable of performing the following motion sequence: arranging the gripper unit 100 in close proximity to the approaching packaging container 20, to activate the gripper unit 100 in order to attach the packaging container 20 to the gripper unit 100, to move the gripper unit 100 and the attached packaging container 20 to the desired position, to release the packaging container 20 by deactivating the gripper unit 100, and to return to the idle position. The complete motion sequence should typically be performed in less than 1 second, such as below 0.5 seconds, even more preferably below 0.3 seconds.

A controller 50 is therefore provided and connected to the gripper unit 100 in order to control activation and deactivation of the gripper unit 100. In some embodiments, the controller 50 is also in communication with the robotic arm 10.

The controller 50 preferably comprises a non-transitory computer-readable storage medium, storing one or more programs configured for execution by one or more processors, the one or more programs comprising instructions for controlling the gripper unit 100.

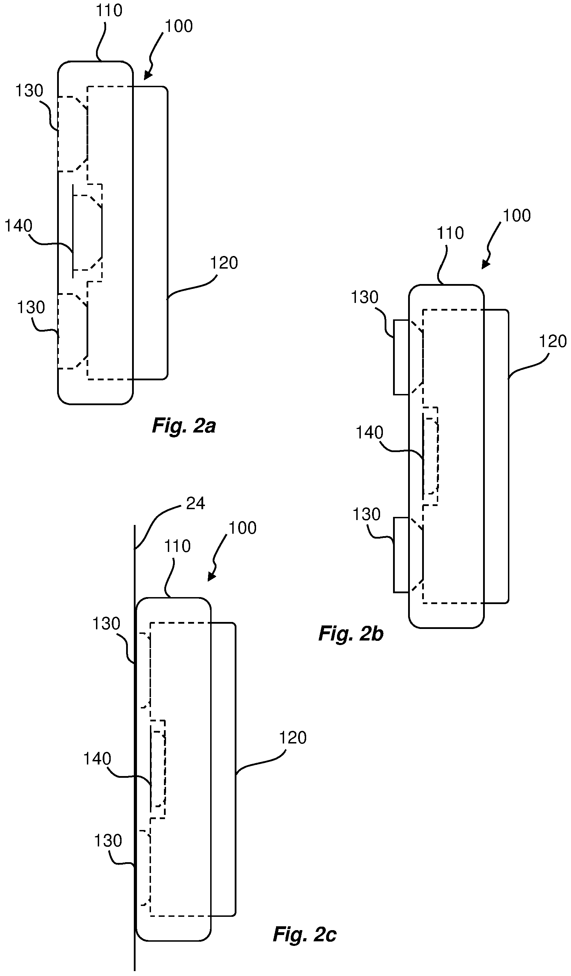

Now turning to Figs. 2a-c further details of the gripper unit 100 are shown. The gripper unit 100 is a vacuum gripper unit 100 being capable of attaching an adjacent packaging container by applying a suction force using one or more vacuum cups 130.

The gripper unit 100 comprises a housing 110 and a vacuum distribution unit 120. The vacuum distribution unit 120 is moveable in relation to the housing 110, and comprises at least one suction cup 130. In the shown example, the vacuum distribution unit 120 comprises two spaced apart suction cups 130 for attaching to the packaging container by applying vacuum, and one control suction cup 140.

All suction cups 130, 140 are preferably activated simultaneously. This is particularly the case when the suction cups 130, 140 share a common air supply (as will be described later). By activation of the suction cups 130 and the control suction cup 140, the vacuum distribution unit 120 is moved towards the housing 110, in the direction indicated by the block arrow in Fig. 2a. Hence, the vacuum distribution unit 120 is moved from an idle position (shown in Fig. 2a) to an active position (shown in Fig. 2b). When the vacuum distribution unit 120 is in the active position, the suction cups 130 are arranged in an extended position, i.e. the distal end of each suction cup 130 is arranged outside the housing 110.

In the active position, as shown in Fig. 2b, the gripper unit 100 is ready to grip a packaging container. As vacuum is applied, upon activation of the suction cups 130, 140, a suction force is generated in each suction cup 130, 140 thereby pulling the packaging container, as shown in Fig. 2c towards the housing 110. Due to the flexible material of the suction cups 130, the planar panel 24 of the packaging container will be in contact, and flush with, the housing 110.

The gripper unit 100 is used to collate individual packaging containers while they are in motion, necessitating the activation of the suction cups 130. The vacuum operated suction cups 130 need to interfere with the packaging containers that they are picking in order to attain a seal, and therefore a robust grip.

Should the suction cups 130 stand out of the housing 110 (and ready to contact a packaging container), it would possibly impede the collection of the packaging container. Thus, the gripper unit 100 described herein is configured to retract the suction cups 130, leaving a "clean" housing surface that does not impede packaging container movement.

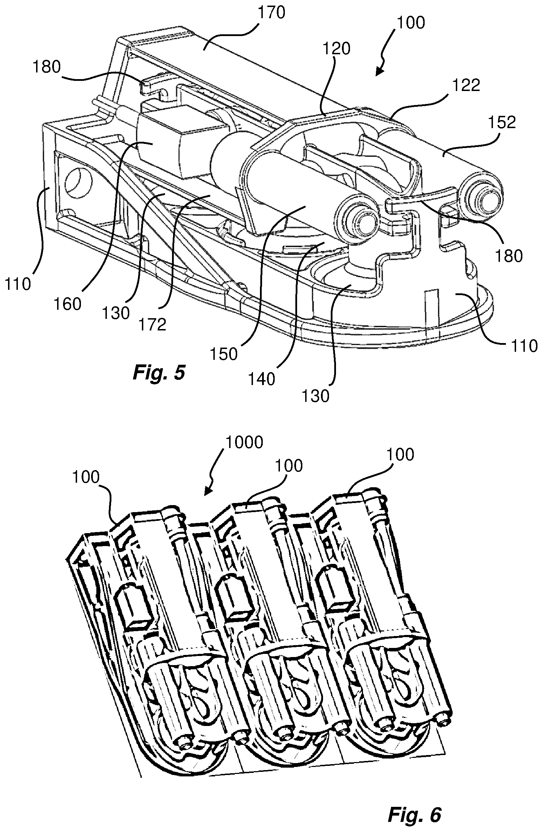

In fact, the suction cups 130 are controlled to protrude to ensure the suction cups 130 meet the packaging container before the housing 110. The suction cups 130 are retracted by cutting off air supply to the vacuum generators 150, 152 (see Fig. 5), in order to ensure the suction cups 130 do not interfere with packaging containers being placed.

In the embodiment shown in Figs. 2a-c, three vacuum cups 130, 140 are employed and mounted together on the common vacuum distribution unit 120. Two suction cups 130 are configured to grip the packaging container 20, and the third suction cup 140 acts as an actuator to pull the vacuum distribution unit 120 forwards.

During operation, placement of the packaging container will be stable as the suction cups 130 withdraw from the packaging container, into the housing 110, as the vacuum is released. This is achieved by de-activating the control suction cup 140 and the suction cups 130 simultaneously, whereby the vacuum distribution unit 120 is allowed to return to its idle position of Fig. 2a.

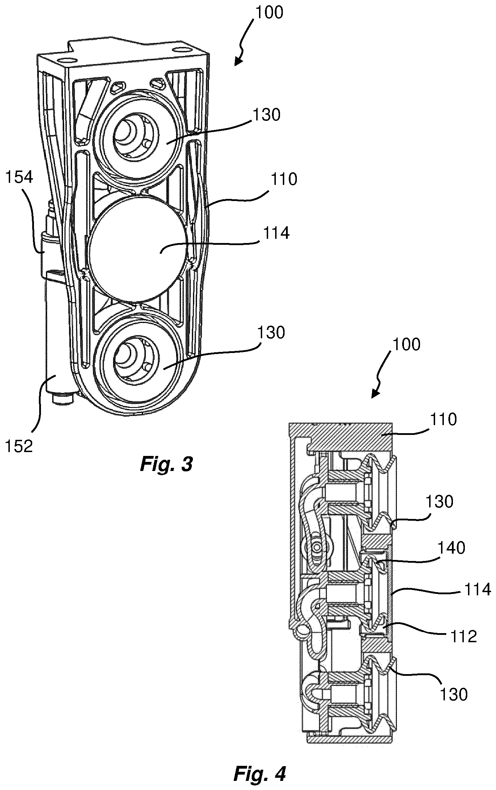

Now turning to Fig. 3, some further details of the gripper unit 100 will be described. The suction cups 130 used to attach to the packaging container 20 are connected to a common vacuum generator 150 (seen in Fig. 5), forming part of the vacuum distribution unit 120. Preferably, the vacuum generator 150 is designed for porous material, thus being capable of generating high flow and low vacuum. This will reduce the grip time, and ensure that the packaging material of the packaging container 20 is undamaged.

As shown in Fig. 4, the control suction cup 140 is arranged inside a cavity 112 of the housing 110, wherein the cavity 112 is closed in the plane of the surface of the housing 110 by means of a lid 114. When the control suction cup 140 is activated, preferably by means of a separate vacuum generator 152 (see Fig. 5), the vacuum will pull the entire vacuum distribution unit 120 towards the housing 110 as the control suction cup 140 applies the suction force against the inside of the lid 114. This is shown in Fig. 4, where the distal end of each suction cup 130 extends out from the housing 110 to some extent. Once the vacuum is released from the control suction cup 140, the suction cups 130 will return to their withdrawn position as indicated in Fig. 2a due to the return movement of the entire vacuum distribution unit 120.

Still referring to Fig. 5, while the housing 110 forms a static frame and a robust connection to the robotic arm 10 (see Fig. 1), the vacuum distribution unit 120 comprises a rigid frame 122 to which the suction cups 130, the control suction cup 140, vacuum generators 150, 152, and an air supply connection 154 (see Fig. 3) are mounted. Yet further, the vacuum distribution unit 120 may be provided with a vacuum transducer 160 in order to allow for condition monitoring of the suction cups 130, or to ensure that a "grip" has been attained between the gripper unit 100 and the packaging container 20.

The vacuum generators 150, 152 may share a common air supply 154, thus making the connection of the gripper-unit 100 both simple and fast when change-overs or replacements of components are needed. As can be further seen in the drawings, the vacuum generators 150, 152 and the suction cups 130, 140 are placed in extreme proximity, thereby reducing the reaction times for pick and place of packaging containers 20.

An additional advantage of the gripper unit 100 is that the low-profile design allows the gripper unit 100 to work in close proximity to other packaging containers without causing crashes or collisions, and again reducing cycle time.

The gripper unit 100 reduces lost time by creating high-flow low-vacuum at the exact point of need, in a design that is dimensioned to reduce air consumption, and to reduce areas that are subjected to the vacuum. These features reduce the time needed to create a positive bond between the gripper unit 100 and an adjacent packaging container 20, and similarly reduce the time needed to release the bond.

In a preferred embodiment, the gripper unit 100 has no sliding or rotating parts; the lifetime will benefit from this. However, the vacuum distribution unit 120 should be allowed to move relative the housing 110 as explained above. Even more preferably, the vacuum distribution unit 120 should also be allowed to automatically return to its idle position once the control suction cup 140 is de-activated.

Accordingly, a gripper unit 100 is proposed where a housing 110 is connected to a vacuum distribution unit 120 in a way that allows for a linear motion of the vacuum distribution unit 120 towards and away from the housing 110, while at the same time preventing movement of the vacuum distribution unit 120 in any other direction.

An embodiment of such connection is shown in Fig. 5. A first leaf spring 170 interconnects the housing 110 and the vacuum distribution unit 120. The first leaf spring 170 provides a resilient suspension allowing movement in the directions of the planar surfaces of the leaf spring 170 (up or down in the view of Fig. 5), and it also provides a suspension which is rigid in the cross directions of these planar surfaces.

The first leaf spring 170 is arranged at an inner part of the gripper unit 100, facing the robotic arm 10 during use, connecting the housing 110 to the rigid frame 122 of the vacuum distribution unit 120.

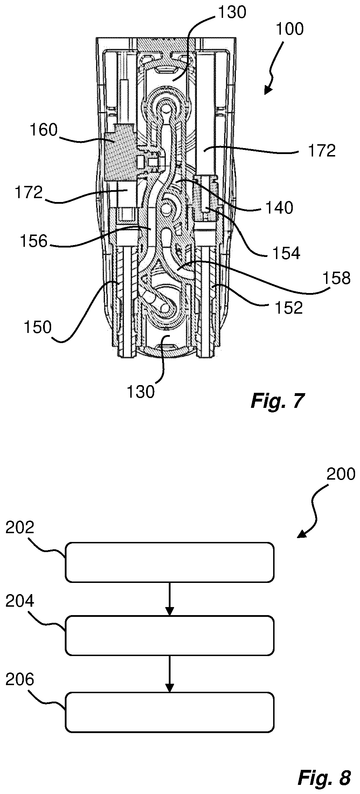

Two additional leaf springs 172 are also provided, spaced apart from the first leaf spring 170. The two additional leaf springs 172 (of which only one is shown in Fig. 5) are arranged at a level closer to the suction cups 130, as indicated in Fig. 5. All leaf springs 170, 172 are arranged in parallel. One of the additional leaf springs 172 is extending approximately in a direction being aligned with the longitudinal direction of the vacuum generator 150, while the other of the additional leaf springs 172 is extending approximately in a direction being aligned with the longitudinal direction of the vacuum generator 152 (see Fig. 7, in which the two additional leaf springs 172 are visible).

The motion of the vacuum distribution unit 120 is physically constrained by leaf springs 170, 172, which protect the vacuum distribution unit 120 against overtravel. The housing 110 is provided with two spaced apart T-shaped members 180 which form stop surfaces for the vacuum distribution unit 120 during activation and de-activation of the suction cups 130, 140. Due to the arrangement of the leaf springs 170, 172, the motion is guided in a pure longitudinal direction by use of the leaf springs 170, 172 disposed in a parallelogram configuration.

The beneficial effects of the first leaf spring 170 are thereby enhanced by the arrangement of the additional leaf springs 172 interconnecting the vacuum distribution unit 120 and the housing 110. The arrangement of the additional leaf springs 172 further reduces the freedom of movement of the vacuum distribution unit 120, such that it may essentially only move up and down in the first direction, as limited by a constant radii provided by each leaf spring 170, 172.

In particular, the addition of the additional leaf springs 172 reduces any torsion along the length direction of the primary leaf spring 170 or any bending of the leaf spring 170. Furthermore, arranging essentially equally long leaf springs 170, 172 in parallel but separated in the motion direction, provides a means of maintaining the orientation of the vacuum distribution unit 120, meaning that the vacuum distribution unit 120 is prevented from rotating.

In Fig. 6 an example of implementation of gripper units 100 is shown. A gripper unit assembly 1000 comprises at least one gripper unit 100, in this embodiment three gripper units 100 are arranged in parallel, and mounted together. Preferably, the gripper units 100 are arranged in a common housing (not shown) so that the robotic arm 10 (see Fig. 1) can be connected to the common housing. Hence, the gripper unit assembly 1000 can be used to move three packaging containers at the same time, as long as the packaging containers are positioned relative each other so that they fit with the dimensions of the gripper unit assembly 1000.

Now returning to Fig. 7 an embodiment of a gripper unit 100 is shown in cross-section. In particular, Fig. 7 shows how the first vacuum generator 150 is connected to both suction cups 130 by means of a common fluid channel 156. As can be seen, the vacuum transducer 160 is also connected to the common fluid channel 156 so that the vacuum level can be measured accurately. The second vacuum generator 152 is connected to the control suction cup 140 via a control fluid channel 158.

Now turning to Fig. 8, a method 200 for a gripper unit 100 is schematically shown. In a first step 202, the gripper unit 100 is activated to move at least one suction cup 130 out from a housing 110, so that the at least one suction cup 130 protrudes from the housing surface. In a next step 204 the at least one suction cup 130 is positioned close to a packaging container 20, and gripping the packaging container 20 because of the applied vacuum. In a final step 206, the gripper unit 100 is deactivated thereby pulling the at least on suction cup 130 back into the housing, and the at least one suction cup 130 is also deactivated simultaneously to release the vacuum and hence also the grip of the packaging container 20.

From the description above follows that, although various embodiments of the invention have been described and shown, the invention is not restricted thereto, but may also be embodied in other ways within the scope of the subject-matter defined in the following claims.

## Claims

1. A gripper unit (100), comprising a housing (110) and a vacuum distribution unit (120) connected to the housing (110) such that linear motion of the vacuum distribution unit (120) is allowed in a first direction towards and away from the housing (110), wherein the gripper unit (100) comprises:
- at least a first leaf spring (170) connecting the vacuum distribution unit (120) to the housing (110);
- at least one vacuum suction cup (130), wherein the at least one suction cup (130) is moveable between an idle position in which the at least one suction cup (130) is arranged completely within the housing (110) of the gripper unit (100), and an active position in which the at least one suction cup (130) is extending out from said housing (110),
wherein the position of the at least one suction cup (130) is controlled using vacuum,
**characterized by** further comprising a control suction cup (140).

2. The gripper unit (100) according to claim 1, further comprising at least one additional leaf spring (172) connecting the vacuum distribution unit (120) to the housing (110).

3. The gripper unit (100) according to claim 2, wherein the at least one additional leaf spring (172) has substantially the same length as the first leaf spring (170).

4. The gripper unit (100) according to claim 2 or 3, wherein the at least one additional leaf spring (172) is arranged in parallel with the first leaf spring (170), but spaced apart in the first direction.

5. The gripper unit (100) according to any of claims 2-4, comprising two additional leaf springs (172) arranged on opposite sides of the first leaf spring (170).

6. The gripper unit (100) according to any of the preceding claims, comprising at least two suction cups (130) operating in the same plane and being jointly movable between the idle position and the active position.

7. The gripper unit (100) according to any of the preceding claims, wherein activation of the control suction cup (140) urges the at least one suction cup (130) to move from the idle position to the active position.

8. The gripper unit (100) according to claim 7, wherein the control suction cup (140) is arranged inside a cavity (112) of the housing (110), wherein said cavity (112) is closed by a lid (114) against which the control suction cup (140) will apply a vacuum.

9. A gripper unit assembly (1000), comprising a plurality of gripper units (100) according to any of the preceding claims.

10. A robotic arm assembly (1), comprising a robot arm (10) and at least one gripper unit (100) according to any of claims 1-8 being provided on the robot arm (10).

## Patentansprüche

1. Greifereinheit (100), umfassend ein Gehäuse (110) und eine Unterdruckverteilungseinheit (120), die mit dem Gehäuse (110) verbunden sind, so dass eine lineare Bewegung der Unterdruckverteilungseinheit (120) in einer ersten Richtung zu dem Gehäuse (110) hin und davon weg gestattet ist, wobei die Greifereinheit (100) Folgendes umfasst:
- mindestens eine erste Blattfeder (170), die die Unterdruckverteilungseinheit (120) mit dem Gehäuse (110) verbindet,
- mindestens einen Vakuum-Saugnapf (130), wobei der mindestens eine Saugnapf (130) zwischen einer Ruheposition, in der der mindestens eine Saugnapf (130) vollständig in dem Gehäuse (110) der Greifereinheit (100) angeordnet ist, und einer Wirkposition, in der sich der mindestens eine Saugnapf (130) aus dem Gehäuse (110) herauserstreckt, beweglich ist,
wobei die Position des mindestens einen Saugnapfs (130) unter Verwendung von Unterdruck gesteuert wird,
**dadurch gekennzeichnet, dass** sie ferner einen Steuer-Saugnapf (140) umfasst.

2. Greifereinheit (100) nach Anspruch 1, ferner umfassend mindestens eine zusätzliche Blattfeder (172), die die Unterdruckverteilungseinheit (120) mit dem Gehäuse (110) verbindet.

3. Greifereinheit (100) nach Anspruch 2, wobei die mindestens eine zusätzliche Blattfeder (172) im Wesentlichen die gleiche Länge wie die erste Blattfeder (170) aufweist.

4. Greifereinheit (100) nach Anspruch 2 oder 3, wobei die mindestens eine zusätzliche Blattfeder (172) parallel zu der ersten Blattfeder (170), aber in der ersten Richtung beabstandet angeordnet ist.

5. Greifereinheit (100) nach einem der Ansprüche 2 - 4, umfassend zwei zusätzliche Blattfedern (172), die auf gegenüberliegenden Seiten der ersten Blattfeder (170) angeordnet sind.

6. Greifereinheit (100) nach einem der vorhergehenden Ansprüche, umfassend mindestens zwei Saugnäpfe (130), die in der gleichen Ebene wirken und gemeinsam zwischen der Ruhestellung und der Wirkstellung bewegbar sind.

7. Greifereinheit (100) nach einem der vorhergehenden Ansprüche, wobei der mindestens eine Saugnapf (130) durch die Aktivierung des Steuer-Saugnapfs (140) dazu gedrängt wird, sich aus der Ruheposition in die Wirkposition zu bewegen.

8. Greifereinheit (100) nach Anspruch 7, wobei der Steuer-Saugnapf (140) in einem Hohlraum (112) des Gehäuses (110) angeordnet ist, wobei der Hohlraum (112) durch einen Deckel (114) verschlossen ist, gegen den der Steuer-Saugnapf (140) einen Unterdruck anlegt.

9. Greifereinheitsbaugruppe (1000), umfassend eine Vielzahl von Greifereinheiten (100) nach einem der vorhergehenden Ansprüche.

10. Roboterarmbaugruppe (1), umfassend einen Roboterarm (10) und mindestens eine an dem Roboterarm (10) vorgesehene Greifereinheit (100) nach einem der Ansprüche 1 - 8.

## Revendications

1. Unité de préhension (100), comprenant un boîtier (110) et une unité d'aspiration (120) reliée au boîtier (110) de telle sorte qu'un déplacement linéaire de l'unité d'aspiration (120) soit possible dans une première direction la rapprochant et l'éloignant du boîtier (110), l'unité de préhension (100) comprenant :
- au moins un premier ressort à lame (170) reliant l'unité d'aspiration (120) au boîtier (110) ;
- au moins une ventouse (130), l'au moins une ventouse (130) étant déplaçable entre une position inactive dans laquelle l'au moins une ventouse (130) est placée complètement à l'intérieur du boîtier (110) de l'unité de préhension (100), et une position active dans laquelle l'au moins une ventouse (130) fait saillie hors dudit boîtier (110),
la position de l'au moins une ventouse (130) étant commandée par dépression,
**caractérisée en ce qu'**elle comprend, en outre, une ventouse de commande (140).

2. Unité de préhension (100) selon la revendication 1, comprenant, en outre, au moins un ressort à lame supplémentaire (172) reliant l'unité d'aspiration (120) au boîtier (110).

3. Unité de préhension (100) selon la revendication 2, dans laquelle l'au moins un ressort à lame supplémentaire (172) présente sensiblement la même longueur que le premier ressort à lame (170).

4. Unité de préhension (100) selon la revendication 2 ou 3, dans laquelle l'au moins un ressort à lame supplémentaire (172) est disposé parallèlement au premier ressort à lame (170), mais espacé dans la première direction.

5. Unité de préhension (100) selon l'une quelconque des revendications 2 à 4, comprenant deux ressorts à lame supplémentaires (172) disposés sur des côtés opposés du premier ressort à lame (170).

6. Unité de préhension (100) selon l'une quelconque des revendications précédentes, comprenant au moins deux ventouses (130) agissant dans le même plan et étant déplaçables conjointement entre la position inactive et la position active.

7. Unité de préhension (100) selon l'une quelconque des revendications précédentes, dans laquelle l'activation de la ventouse de commande (140) entraîne un déplacement de l'au moins une ventouse (130) de la position inactive et la position active.

8. Unité de préhension (100) selon la revendication 7, dans laquelle la ventouse de commande (140) est disposée à l'intérieur d'une cavité (112) du boîtier (110), ladite cavité (112) étant fermée par un couvercle (114) auquel la ventouse de commande (140) appliquera une aspiration.

9. Ensemble d'unités de préhension (1000), comprenant une pluralité d'unités de préhension (100) selon l'une quelconque des revendications précédentes.

10. Ensemble constituant un bras robotisé (1), comprenant un bras robotisé (10) et au moins une unité de préhension (100) selon l'une quelconque des revendications 1 à 8 placée sur le bras robotisé (10).
